# EUROPÄISCHE PATENTSCHRIFT

(11) **EP 4 667 239 B1**
(45) Veröffentlichungstag und Bekanntmachung des Hinweises auf die Patenterteilung: **02.12.2026**
(21) Anmeldenummer: 25177551.6
(22) Anmeldetag: 20.05.2025
(51) Int. Cl.: B60C 9/06, B60C 9/17, B60C 15/00

(54) **LUFTREIFEN AUFWEISEND EINE DOPPELKARKASSE**
PNEUMATIC TIRE HAVING A DOUBLE CARCASS
PNEUMATIQUE COMPORTANT UNE CARCASSE DOUBLE

(30) Priorität: 21.06.2024 DE 102024205793
(43) Veröffentlichungstag der Anmeldung: 24.12.2025
(73) Patentinhaber: Continental Reifen Deutschland GmbH, 30175 Hannover (DE)
(72) Erfinder: Sudikatis, Florian, 30175 Hannover (DE)
(74) Vertreter: Continental Corporation

(56) Entgegenhaltungen:
- DE-B- 1 241 296
- US-A1- 2018 304 690

## Beschreibung

Die Erfindung betrifft einen Luftreifen für ein Leichtfahrzeug, bevorzugt Fahrradreifen, besonders bevorzugt Mountainbike-Reifen, mit einem Laufstreifen, einer Reifenkarkasse, Reifenseitenwänden und zwei Wulstbereichen mit je einem Wulstkern, wobei die Reifenkarkasse genau eine erste Karkasslage, welche im Reifenzenit die radial innerste Karkasslage bildet, und eine zweite Karkasslage aufweist, wobei die beiden Karkasslagen sich jeweils vom Reifenzenit aus über die Reifenseitenwände bis in die Wulstbereiche erstrecken, die Wulstkerne von axial innen nach axial außen umschlingen und in einem Karkasshochschlag nach radial außen über die Seitenwände bis unter den Laufstreifen geführt sind und enden innerhalb einer axialen Erstreckung des Laufstreifens in Karkasslagenenden.

Fahrradreifen mit einer Doppelkarkasse aus zwei Karkasslagen sind in unterschiedlichen Ausführungen bekannt.

Bekannt sind beispielsweise Fahrradreifen, bei denen nur eine der Karkasslagen überlappend bis unter den Laufstreifen geführt ist und die andere Karkasslage bereits im Wulstbereich endet, wie in der DE202020104281U1 offenbart. Derartige Karkassen weisen allerdings nur zwei Lagenstärken in den Seitenwänden auf.

Die EP4010204A1 offenbart Fahrradreifen mit weiteren Karkasskonstruktionen. Offenbart sind dabei insbesondere Fahrradreifen mit Doppelkarkassen, bei denen die Karkasshochschläge alle bis unter den Laufstreifen geführt und dort einander überlappend angeordnet sind. Hierdurch weist der Reifen in den Seitenwänden eine Lagenstärke von vier Lagen und im Zenit eine Lagenstärke von sechs Lagen auf. Eine solche Doppelkarkasse wird insbesondere eingesetzt, um den Reifen auch bei hohen Querkräften zu stabilisieren und eine Verschiebung des Reifens quer zur Fahrtrichtung (sogenanntes "Rollen") zu reduzieren. Entsprechend zeigt der Reifen selbst bei großer Belastung wie z.B. beim Downhill-Fahren ein vorteilhaftes Kurvenverhalten. Im Zenit weist ein derartiger Reifen eine Lagenstärke von sechs Lagen und damit einen sehr guten Pannenschutz auf. Gleichzeitig sind für Delamination und Schwindstellen durch Karkasslagenenden im besonders beanspruchten Zenit vermieden. Die hohe Lagenstärke erhöht jedoch das Gewicht und den Rollwiderstand und bedingt eine verminderte Anpassungsfähigkeit an den Untergrund aufgrund erhöhter Steifigkeit.

Aus der DE 1 241 296 B ist ein Fahrzeugluftreifen mit einer Kreuzkarkasse bekannt. wobei in jeder Reifenseitenwand zwei oder mehr Karkasslagen vorgesehen sind, die in der Zenitpartie des Reifens enden und so verlegt sind, dass sich die Lagenenden der Karkasslagen in der Zenitpartie überlappen.

Die US 2018/0304690 A1 beschreibt einen Fahrradreifen mit einer Karkassstruktur, einer radial außerhalb der Karkassstruktur angeordneten Gürtellage und einem Laufstreifen radial außerhalb der Gürtellage. Die Karkassstruktur weist eine Karkasslage mit zwei ringförmigen Ankerstrukturen und mehreren Verstärkungscorden auf.

Der Erfindung liegt die Aufgabe zu Grunde, einen Luftreifen, bevorzugt einen Fahrradreifen, besonders bevorzugt einen Mountain-Bike Reifen, zur Verfügung zu stellen, der eine verbesserte Anpassung an den Untergrund bei gleichzeitiger hoher Haltbarkeit im Zenit sowie ein vorteilhaftes Kurvenverhalten bei hohen Querkräften, z.B. im Downhill, aufweist.

Gelöst wird die Aufgabe durch einen Reifen gemäß Anspruch 1.

Ein derartiger erfindungsgemäßer Luftreifen, bevorzugt Fahrradreifen, zeichnet sich dadurch aus, dass eine oder beide Karkasslagen als asymmetrische Karkasslagen ausgebildet sind, wobei für die asymmetrische Karkasslage gilt, dass die beiden Karkasshochschläge der jeweiligen asymmetrischen Karkasslage in derselben axialen Hälfte des Reifens enden.

Sollten die Laufstreifenenden nicht klar identifizierbar sein, so ist die axiale Erstreckung des Laufstreifens als nominelle Reifenbreite x 1,3 und der Laufstreifen als symmetrisch zur axialen Mitte des Reifens anzunehmen. Die axiale Erstreckung des Laufstreifens oder andere axiale Abstände, axiale Längen, axiale Überlappungen etc. können im Sinne der Anmeldung ermittelt werden, indem senkrecht zur Umfangsrichtung ein Reifenabschnitt aus dem Reifen geschnitten und dieser auf einer ebenen Unterlage flach hingelegt wird und dann in diesem Bezugssystem die axiale Erstreckung bzw. der jeweilige axiale Abstand, axiale Länge oder die axiale Überlappung etc., ermittelt wird.

Die asymmetrische Karkasslage, deren Karkasshochschläge wie dargelegt beide in derselben axialen Hälfte des Reifens enden, weist somit im Zenit und damit in der axialen Mitte keinen Überlapp auf und trägt damit nicht mit einer Lagenstärke von drei Lagen, sondern mit eine reduzierte Lagenstärke von zwei Lagen zur Lagenstärke der Karkasse im Zenit bei, weitgehend unabhängig von Produktionstoleranzen. Gleichzeitig sind die Karkasslagenenden dieser asymmetrischen Karkasslage beide auf einer axialen Hälfte des Reifens und somit nicht im Zenit angeordnet, wodurch dort in diesem besonders beanspruchten Bereich Schwachstellen durch Karkasslagenenden, welche Delamination und Schwindstellen begründen können, vermieden sind. Somit ist trotz der verringerten Lagenstärke eine hohe Haltbarkeit im Zenit weiterhin gewährleistet.

Es hat sich herausgestellt, dass ein solcher Luftreifen für ein Leichtfahrzeug, bevorzugt Fahrradreifen, besonders bevorzugt Mountain-Bike Reifen dessen Karkasse durch die spezielle Karkasskonstruktion aufweisend eine oder zwei asymmetrische Karkasslagen eine Lagenstärke von vier Lagen in der Seitenwand und eine reduzierte Lagenstärke im Zenit und eine verringerte Steifigkeit im Laufstreifen aufweist, wobei gleichzeitig Schwachstellen im Zenit vermieden sind.

Erstaunlicherweise hat sich somit gezeigt, dass der erfindungsgemäße Luftreifen einen vorteilhaften Kompromiss aus Stabilität und Flexibilität bei gleichzeitig hoher Haltbarkeit im besonders beanspruchten Zenit ermöglicht.

Der erfindungsgemäße Luftreifen erreicht ein vorteilhaftes Kurvenverhalten bei hohen Querkräften und eine verbesserte Anpassung an den Untergrund bei gleichzeitig hoher Haltbarkeit im Zenit und reduziertem Gewicht.

Derartige Eigenschaften sind beispielsweise bei kurvenreichen Downhillfahrten, insbesondere im Renneinsatz, von besonderem Vorteil.

Verglichen mit einem Luftreifen mit einer Lagenstärke von nur drei Lagen in der Seitenwand ergibt sich erfindungsgemäß eine höhere Festigkeit und ein besseres Kurvenverhalten durch ein geringeres Rollen in axialer Richtung, da die Seitenführungskräfte erhöht sind. Der erfindungsgemäße Luftreifen weist, bei nur mäßig erhöhtem Gewicht, eine erhöhte Reißfestigkeit bei Kurvenfahrten auf, was insbesondere bei Downhillfahrten, v.a. im Renneinsatz, von großem Vorteil ist.

Eine erste Alternative ist dadurch gegeben, dass die erste Karkasslage und die zweite Karkasslage als asymmetrische Karkasslagen ausgebildet sind.

Somit weist der Reifen im Zenit eine Lagenstärke der Karkasse von genau vier Lagen auf. Ein solcher Reifen weist bei weiterhin vorteilhaften Eigenschaften einen geringen Rollwiderstand und eine geringe Steifigkeit auf. Der Reifen eignet sich besonders gut.

Gemäß der ersten Alternative enden die Karkasshochschläge der ersten Karkasslage in einer axialen Hälfte des Reifens und die Karkasshochschläge der zweiten Karkasslage enden in einer anderen axialen Hälfte des Reifens.

Hierdurch werden die Karkasslagenenden auf beide axialen Hälften des Reifens verteilt. Es erfolgt somit eine besonders gute Verteilung von mit Karkasslagenenden verbundenen Schwachstellen bei gleichzeitig einer Lagenstärke der Karkasse von lediglich vier Lagenstärken im Zenit.

Eine vorteilhafte Ausführungsform ist dabei dadurch gegeben, dass die Karkasshochschläge der einen Karkasslage in einem minimalen Abstand von 40% bis 60% einer axialen Erstreckung des Laufstreifens zu den Karkasshochschlägen der anderen Karkasslage enden.

Somit ist eine besonders gute Verteilung der Schwachstellen erreicht.

Eine zweite Alternative ist dadurch gegeben, dass die Karkasse genau eine asymmetrische Karkasslage aufweist, so dass entweder die erste Karkasslage oder die zweite Karkasslage als asymmetrische Karkasslage ausgebildet ist.

Die beiden Karkasslagenenden der jeweils anderen Karkasslage sind somit auf unterschiedlichen axialen Hälften des Reifens innerhalb der axialen Erstreckung des Laufstreifens angeordnet.

Eine vorteilhafte Ausführungsform ist dadurch gegeben, dass die Karkasshochschläge der asymmetrischen Karkasslage überlappungsfrei und voneinander axial beabstandet, bevorzugt mit einem axialen Abstand größer als 0% bis maximal 50%, bevorzugt 5% bis 40%, der axialen Erstreckung des Laufstreifens beabstandet, angeordnet sind.

Somit ist eine lokale Versteifung der Karkasse durch die Vermeidung eines Überlapps der Karkasshochschläge der jeweiligen Karkasslage vermieden und eine besonders materialarme Ausführung erreicht. Eine oder zwei asymmetrischen Karkasslagen können derart ausgebildet sein.

Eine vorteilhafte Ausführungsform ist dadurch gegeben, dass die Karkasshochschläge der einen oder beiden asymmetrischen Karkasslage(n) jeweils einander bündig treffend angeordnet sind.

Somit trägt die asymmetrische Karkasslage durchgehend zwei Lagenstärken bei, wobei durch die asymmetrische Anordnung der Lagenenden in einer axialen Hälfte des Reifens Schwachstellen, welche zur Delamination und/oder Schwindstellen führen können, im Zenit vermieden sind. Eine oder zwei asymmetrischen Karkasslagen können derart ausgebildet sein.

Eine vorteilhafte Ausführungsform ist dadurch gegeben, dass die Karkasshochschläge der asymmetrischen Karkasslage einander überlappend, bevorzugt mit einer axialen Überlappung von größer als 0% bis maximal 50%, bevorzugt 5% bis 40%, der axialen Erstreckung 8 des Laufstreifens überlappend, angeordnet sind.

Hiermit ist verlässlich eine durchgängig mindestens zwei Lagenstärken beitragende asymmetrische Karkasslage erwirkt. Eine oder zwei asymmetrischen Karkasslagen können derart ausgebildet sein.

Eine vorteilhafte Ausführungsform ist dadurch gegeben, dass radial zwischen der Karkasse und dem Laufstreifen eine oder zwei Schutzlagen aufweisend Festigkeitsträger angeordnet sind, welche radial außerhalb der Wulstkerne, insbesondere innerhalb der axialen Erstreckung des Laufstreifens, enden.

Der Reifen weist somit einen zusätzlichen Schnittschutz bzw. Durchstichschutz auf. Eine derartige Schutzlage aufweisend Festigkeitsträger kann gerade dann sinnvoll sein, wenn die Karkasse im Zenit eine im Vergleich zu den Seitenwänden reduzierte Lagenstärke aufweist. In diesem Fall können Steifigkeitssprünge in axialer Richtung vermieden werden.

Gemäß der Erfindung unterscheidet sich eine Schutzlage von einer Karkasslage zumindest darin, dass gemäß der Erfindung jede Karkasslage auf beiden Reifenhälften die Wulstkerne umschlingt wohingegen eine Schutzlage auf beiden Reifenhälften radial außerhalb der Wulstkerne endet und diese somit nicht umschlingt.

Eine vorteilhafte Ausführungsform ist dadurch gegeben, dass zumindest eine Schutzlage der einen oder zwei Schutzlagen alle offenen Enden der ersten Karkasslage abdeckt.

Hierdurch ist ein Ablösen (Delamination) der offenen Enden der ersten Karkasslage vermieden und ein verbesserter Pannenschutz bei erhöhter Einfederung des Reifens und bei Kurvenfahrten erzielt.

Eine vorteilhafte Ausführungsform ist dadurch gegeben, dass die Karkasse eine Diagonalkarkasse ist, wobei die Festigkeitsträger der beiden Karkasslagen (6,7) bei gegenläufiger Steigrichtung in den Seitenwänden jeweils einen Winkel von 25° bis 75°, bevorzugt von 35° bis 60°, besonders bevorzugt von 40° bis 55°, mit der Umfangsrichtung einschließen.

Bei einer solchen Diagonalkarkasse sind die Vorteile der Fahrstabilität von besonderer Bedeutung.

Eine vorteilhafte Ausführungsform ist dadurch gegeben, dass die Festigkeitsträger der ersten Karkasslage und/oder der zweiten Karkasslage textile Festigkeitsträger, bevorzugt aufweisend Polyamid und/oder Polyester und/oder Baumwolle, sind.

Textile Festigkeitsträger eigenen sich hervorragend als Karkassmaterial. Die textilen Festigkeitsträger können ganz oder teilweise aus Polyamid, bevorzugt aus Polyamid 4.6 oder Polyamid 6.6, besonders bevorzugt aus Polyamid 6.6, oder aus Polyester, bevorzugt aus Polyethylenterephthalat (PET), oder aus Baumwolle gebildet sein.

Der Luftreifen für Leichtfahrzeuge eignet sich hervorragend für Fahrräder einschließlich rein muskelbetriebene Fahrräder und Elektrofahrräder, Lastenräder, für Roller, einschließlich Elektroroller, für Rollstühle, oder dergleichen. Entsprechend kann es sich um einen Fahrradreifen und/oder um einen Rollerreifen und/oder einen Rollstuhlreifen handeln.

Der Luftreifen eignet sich hervorragend für Zweiräder, insbesondere Fahrräder. Der Luftreifen eignet sich aber auch für mehrrädrige Fahrzeuge wie beispielsweise dreirädrige Lastenfahrräder.

Eine vorteilhafte Ausführungsform ist dadurch gegeben, dass es sich um einen Fahrradreifen, insbesondere um einen Fahrradreifen für einen Einsatzbereich gemäß mindestens Kategorie 1, bevorzugt Kategorie 4 und/oder 5 und/oder höher, der ASTM F2043-13, handelt.

In einer bevorzugten Ausführungsform handelt es sich um einen Fahrradreifen, insbesondere Fahrradreifen für einen Einsatzbereich gemäß mindestens Kategorie 1, bevorzugt Kategorie 4 und/oder 5 oder höher, der ASTM F2043-13, ist ein vorteilhaftes Kurvenverhalten bei gleichzeitig verbesserter Anpassung an den Untergrund von besonderer Bedeutung. Ein Einsatzbereich gemäß Kategorie 4 umfasst beispielsweise Abfahrten in rauem Gelände bis zu einer Geschwindigkeit von max. 40 km/h sowie Sprünge bis zu einer Höhe von max. 122 cm. Ein Einsatzbereich gemäß Kategorie 5 umfasst beispielsweise Abfahrten in rauem Gelände bis zu einer Geschwindigkeit von über 40 km/h. Ein Einsatzbereich höher als Kategorie 5 kann über die in den Kategorien spezifizierten Belastungen hinaus gehen.

Es kann sich um einen Mountainbike-Reifen und/oder Downhillreifen und/oder Enduro Reifen und/der Gravel-Reifen handeln. Für derartige Fahrradreifen ist ein vorteilhaftes Kurvenverhalten bei gleichzeitig verbesserter Anpassung an den Untergrund von besonderer Bedeutung.

Der Fahrradreifen kann eine Querschnittsbreite von 35 mm bis 132 mm, bevorzugt von 45 mm bis 70 mm, aufweisen.

Der Fahrradreifen kann im Zenit eine Materialstärke von 1,4 mm bis 10 mm von den radial äußersten Karkassfestigkeitsträgern bis zur Lauffläche aufweisen.

Alle in dieser Beschreibung wiedergegebenen Ausführungsformen der erfindungsgemäßen Luftreifen für ein Leichtfahrzeug stellen Beispiele der Ausgestaltung der Erfindung dar und sind nicht einschränkend zu sehen. Entsprechend sind auch durch einzelne oder mehrere Merkmale einer Ausführungsform alleine oder die Kombination der Merkmale verschiedener Ausführungsformen weitere Ausführungsformen der Erfindung gegeben, die Gegenstand der Erfindung sind, soweit diese nicht explizit anders in der Beschreibung erläutert wird. Ferner sind auch Kombinationen von bevorzugten und besonders bevorzugten Ausführungsformen untereinander miteinander kombinierbar.

Weitere Merkmale, Vorteile und Einzelheiten der Erfindung werden nun anhand der schematischen Zeichnungen, die Ausführungsbeispiele darstellen, näher erläutert. Dabei zeigt die
Fig. 1 einen Querschnitt durch einen Luftreifen gemäß der Erfindung,
Fig. 2 flache Anordnung des Luftreifens gemäß Fig. 1,
Fig. 3 einen Ausschnitt einer Anordnung einer asymmetrischen Karkasslage,
Fig. 4 einen Ausschnitt einer Anordnung einer asymmetrischen Karkasslage.

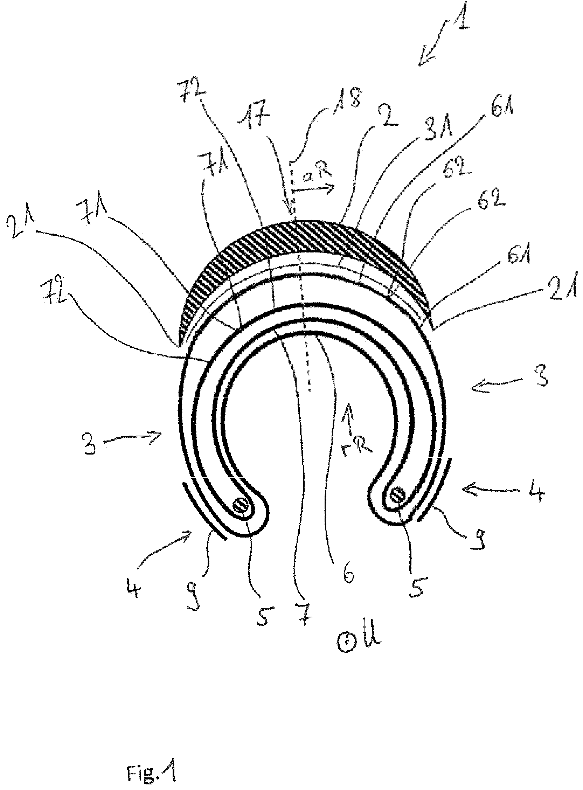

Die Figur 1 zeigt schematisch einen Querschnitt durch einen Luftreifen gemäß der Erfindung.

Es handelt sich um Luftreifen 1 für ein Leichtfahrzeug, bevorzugt Fahrradreifen, besonders bevorzugt Mountainbike-Reifen, mit einem Laufstreifen 2, einer Reifenkarkasse, Reifenseitenwänden 3 und zwei Wulstbereichen 4 mit je einem Wulstkern 5. Die Reifenkarkasse weist genau zwei Karkasslagen auf, nämlich eine erste Karkasslage 6, welche im Reifenzenit 17 die radial innerste Karkasslage bildet, und eine zweite Karkasslage 7. Die beiden Karkasslagen 6,7 erstrecken sich jeweils vom Reifenzenit 17 aus über die Reifenseitenwände 3 bis in die Wulstbereiche 4, umschlingen dort die Wulstkerne 5 von axial innen nach axial außen und sind vom Wulstbereich 4 aus in einem Karkasshochschlag 61,71 nach radial außen über die Seitenwände 3 bis unter den Laufstreifen 2 geführt und enden innerhalb einer axialen Erstreckung 8 des Laufstreifens 2 in Karkasslagenenden 62,72.

In der Figur 1 sind beide Karkasslagen als asymmetrische Karkasslagen 6,7 ausgebildet. Dabei gilt für jede asymmetrische Karkasslage 6,7, dass beide Karkasshochschläge 61,71 der jeweiligen asymmetrischen Karkasslage 6,7 in derselben axialen Hälfte des Reifens enden. Der dargestellte Reifen 1 weist somit im Zenit 17 und somit in seiner axialen Mitte 18 eine Lagenstärke der Karkasse von vier Lagen auf.

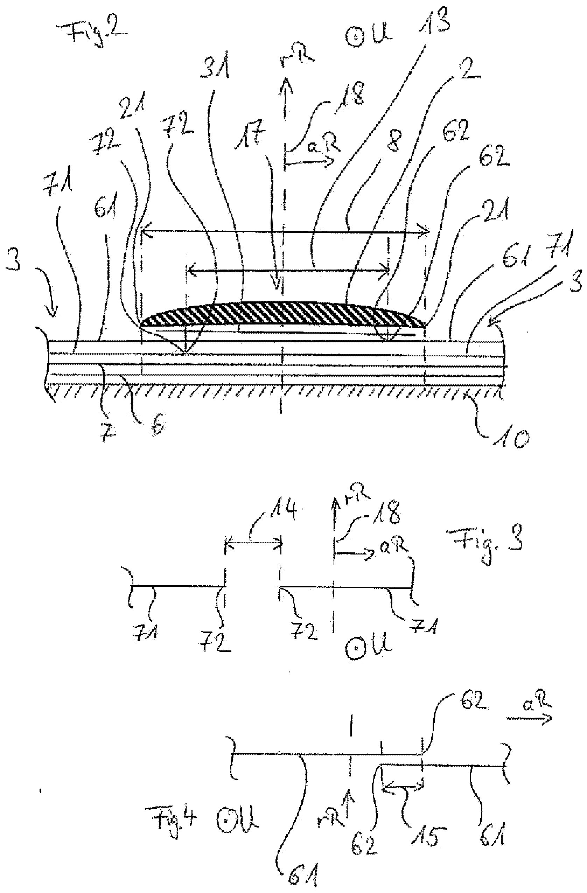

Die axiale Erstreckung 8 des Laufstreifens 2 oder andere axiale Abstände, axiale Längen, axiale Überlappungen etc. können im Sinne der Anmeldung ermittelt werden, indem senkrecht zur Umfangsrichtung U ein Reifenabschnitt aus dem Reifen geschnitten und dieser auf eine ebene Unterlage 10 flach gedrückt wird und dann in diesem Bezugssystem die axiale Erstreckung bzw. der jeweilige axiale Abstand, axiale Länge oder die axiale Überlappung etc., ermittelt wird. Zur Verdeutlichung ist ein derartigen Anordnung des Reifens auf einer ebenen Unterlage 10 gemäß Figur 1 in der Figur 2 skizziert. Sollten die Laufstreifenenden 21 nicht klar identifizierbar sein, so ist die axiale Erstreckung des Laufstreifens als nominelle Reifenbreite x 1,3 und der Laufstreifen als symmetrisch zur axialen Mitte 18 des Reifens anzunehmen.

Beim in der Figur 1 dargestellten Reifen enden die beiden Karkasshochschläge 61 der ersten Karkasslage 6 mit ihren beiden Karkasslagenenden 62 auf der einen axialen Hälfte des Reifens und die beiden Karkasshochschläge 71 der zweiten Karkasslage 7 mit ihren beiden Karkasslagenenden 72 in der anderen axialen Hälfte des Reifens, jeweils innerhalb der axialen Erstreckung 8 des Laufstreifens 2.

Es kann aber auch nur eine der Karkasslagen als asymmetrische Karkasslage ausgebildet sein nicht dargestellt. Dabei kann es sich um die erste Karkasslage oder um die zweite Karkasslage handeln. Die beiden Karkasslagenenden der jeweils anderen Karkasslage sind somit auf unterschiedlichen axialen Hälften des Reifens innerhalb der axialen Erstreckung 8 des Laufstreifens angeordnet.

Wie in der Figur 1 dargestellt sind die Karkasshochschläge 61,71 der asymmetrischen Karkasslagen 6,7 einander bündig treffend angeordnet sind. Die erste Karkasslage 6 und/oder die zweite Karkasslage 7 können aber auch anders ausgebildet sein, insbesondere wie in den Figuren 3 und 4 dargestellt.

Die Karkasshochschläge 61 der ersten Karkasslage 6 können, wie dargestellt, in einem minimalen Abstand 13 von 40% bis 60% der axialen Erstreckung 8 des Laufstreifens 2 zu den Karkasshochschlägen 71 der zweiten Karkasslage 7 enden.

Der Reifen 1 kann keine, zwei oder, wie dargestellt, eine Schutzlage 31 aufweisen. Eine Schutzlage 31 weist Festigkeitsträger auf und ist radial zwischen der Karkasse und dem Laufstreifen 2 angeordnet und endet radial außerhalb der Wulstkerne 5, insbesondere innerhalb der axialen Erstreckung 8 des Laufstreifens 2. Die dargestellte Schutzlage 31 deckt alle offenen Enden 62 der ersten Karkasslage 6 ab.

Der Reifen kann, wie dargestellt, optional einen Wulstschutz 9 aufweisen.

Die Karkasse ist bevorzugt als Diagonalkarkasse ausgeführt, wobei die Festigkeitsträger der beiden Karkasslagen 6,7 bei gegenläufiger Steigrichtung in den Seitenwänden jeweils einen Winkel von 25° bis 75°, bevorzugt von 35° bis 60°, besonders bevorzugt von 40° bis 55°, mit der Umfangsrichtung einschließen.

Die Festigkeitsträger einer oder beider Karkasslagen 6,7 sind textile Festigkeitsträger. Sie können ganz oder teilweise aus Polyamid, bevorzugt Polyamid 4.6 oder Polyamid 6.6, oder aus Polyester oder aus Baumwolle gebildet sein. Besonders bevorzugt sind Festigkeitsträger aus Polyamid 6.6.

Es handelt sich insbesondere um einen Fahrradreifen 1, bevorzugt um einen Fahrradreifen für einen Einsatzbereich gemäß mindestens Kategorie 1, bevorzugt Kategorie 4 und/oder 5 und/oder höher, der ASTM F2043-13. Es kann sich um einen Mountainbike-Reifen und/oder Downhillreifen und/oder Enduro Reifen und/der Gravel-Reifen handeln. Der Fahrradreifen kann eine Querschnittsbreite von 35 mm bis 132 mm, bevorzugt von 45 mm bis 70 mm, aufweisen.

Die Figuren 3 und 4 zeigen schematisch alternative Anordnungen der Karkasslagenenden von asymmetrischen Karkasslagen. Die jeweils dargestellte asymmetrische Karkasslage kann die erste Karkasslage 6 und/oder die zweite Karkasslage 7 der Figur 1 ersetzen.

Die Figur 3 zeigt beispielhaft eine zweite Karkasslage 7, wobei die Karkasshochschläge 71 der asymmetrischen Karkasslage 7 überlappungsfrei und voneinander axial beabstandet, bevorzugt mit einem axialen Abstand 14 größer als 0% bis maximal 50%, bevorzugt 5% bis 40%, der axialen Erstreckung 8 des Laufstreifens beabstandet, angeordnet sind.

Es könnte aber auch eine erste Karkasslage entsprechend ausgebildet sein.

Die Figur 4 zeigt beispielhaft eine erste Karkasslage 6, wobei die Karkasshochschläge 61 der asymmetrischen Karkasslage 6,7 einander überlappend, bevorzugt mit einer axialen Überlappung 15 von größer als 0% bis maximal 50%, bevorzugt 5% bis 40%, der axialen Erstreckung 8 des Laufstreifens überlappend, angeordnet sind.

### Bezugszeichenliste

- 1: Luftreifen
- 2: Laufstreifen
- 3: Reifenseitenwand
- 4: Wulstbereich
- 5: Wulstkern
- 6: erste Karkasslage
- 7: zweite Karkasslage
- 8: axiale Erstreckung des Laufstreifens
- 9: Wulstschutz
- 10: ebene Unterlage
- 13: axialer Abstand
- 14: axialer Abstand
- 15: axiale Überlappung
- 17: Reifenzenit
- 18: axiale Mitte
- 21: Laufstreifenende
- 31: Schutzlage
- 61: erster Karkasshochschlag
- 62: Karkasslagenende der ersten Karkasslage
- 71: zweiter Karkasshochschlag
- 72: Karkasslagenende der zweiten Karkasslage

- U: Umfangsrichtung
- rR: radiale Richtung
- aR: axiale Richtung

## Patentansprüche

1. Luftreifen (1) für ein Leichtfahrzeug, bevorzugt Fahrradreifen, besonders bevorzugt Mountainbike-Reifen, mit einem Laufstreifen (2), einer Reifenkarkasse, Reifenseitenwänden (3) und zwei Wulstbereichen (4) mit je einem Wulstkern (5),
wobei die Reifenkarkasse genau eine erste Karkasslage (6), welche im Reifenzenit (17) die radial innerste Karkasslage bildet, und eine zweite Karkasslage (7) aufweist,
wobei die beiden Karkasslagen (6,7) sich jeweils vom Reifenzenit (17) aus über die Reifenseitenwände (3) bis in die Wulstbereiche (4) erstrecken, die Wulstkerne (5) von axial innen nach axial außen umschlingen und in einem Karkasshochschlag (61,71) nach radial außen über die Seitenwände (3) bis unter den Laufstreifen (2) geführt sind und enden innerhalb einer axialen Erstreckung (8) des Laufstreifens (2) in Karkasslagenenden (62,72), wobei eine oder beide Karkasslagen als asymmetrische Karkasslagen (6,7) ausgebildet sind, wobei für die asymmetrische Karkasslage gilt, dass die beiden Karkasshochschläge (61,71) der jeweiligen asymmetrischen Karkasslage (6,7) in derselben axialen Hälfte des Reifens enden **dadurch gekennzeichnet, dass**
die erste Karkasslage (6) und die zweite Karkasslage (7) als asymmetrische Karkasslagen ausgebildet sind, wobei die Karkasshochschläge (61) der ersten Karkasslage (6) in einer axialen Hälfte des Reifens enden und die Karkasshochschläge (71) der zweiten Karkasslage (7) in einer anderen axialen Hälfte des Reifens enden, oder
die Karkasse genau eine asymmetrische Karkasslage (6,7) aufweist, so dass entweder die erste Karkasslage (6) oder die zweite Karkasslage (7) als asymmetrische Karkasslage ausgebildet ist.

2. Luftreifen (1) gemäß Anspruch 1, **dadurch gekennzeichnet, dass** die Karkasshochschläge (61) der einen Karkasslage (6) in einem minimalen Abstand (13) von 40% bis 60% einer axialen Erstreckung des Laufstreifens (2) zu den Karkasshochschlägen (71) der anderen Karkasslage (7) enden.

3. Luftreifen (1) gemäß zumindest einem der vorangehenden Ansprüche, **dadurch gekennzeichnet, dass** die Karkasshochschläge (61,71) der asymmetrischen Karkasslage (6,7) überlappungsfrei und voneinander axial beabstandet, bevorzugt mit einem axialen Abstand (14) größer als 0% bis maximal 50%, bevorzugt 5% bis 40%, der axialen Erstreckung (8) des Laufstreifens beabstandet, angeordnet sind.

4. Luftreifen (1) gemäß zumindest einem der vorangehenden Ansprüche, **dadurch gekennzeichnet, dass** die Karkasshochschläge (61,71) der einen oder beiden asymmetrischen Karkasslage(n) (6,7) jeweils einander bündig treffend angeordnet sind.

5. Luftreifen (1) gemäß zumindest einem der vorangehenden Ansprüche, **dadurch gekennzeichnet, dass** die Karkasshochschläge (61,71) der asymmetrischen Karkasslage (6,7) einander überlappend, bevorzugt mit einer axialen Überlappung 15 von größer als 0% bis maximal 50%, bevorzugt 5% bis 40%, der axialen Erstreckung 8 des Laufstreifens überlappend, angeordnet sind.

6. Luftreifen (1) gemäß zumindest einem der vorhergehenden Ansprüche, **dadurch gekennzeichnet, dass** radial zwischen der Karkasse und dem Laufstreifen eine oder zwei Schutzlagen (31) aufweisend Festigkeitsträger angeordnet sind, welche radial außerhalb der Wulstkerne (5), insbesondere innerhalb der axialen Erstreckung (8) des Laufstreifens (2), enden.

7. Luftreifen (1) gemäß dem vorhergehenden Anspruch, **dadurch gekennzeichnet, dass** zumindest eine Schutzlage (31) der einen oder zwei Schutzlagen (31) alle offenen Enden (62) der ersten Karkasslage (6) abdeckt.

8. Luftreifen (1) gemäß zumindest einem der vorhergehenden Ansprüche, **dadurch gekennzeichnet, dass** die Karkasse eine Diagonalkarkasse ist, wobei die Festigkeitsträger der beiden Karkasslagen (6,7) bei gegenläufiger Steigrichtung in den Seitenwänden jeweils einen Winkel von 25° bis 75°, bevorzugt von 35° bis 60°, besonders bevorzugt von 40° bis 55°, mit der Umfangsrichtung einschließen.

9. Luftreifen (1) gemäß zumindest einem der vorhergehenden Ansprüche, **dadurch gekennzeichnet, dass** die Festigkeitsträger der ersten Karkasslage (6) und/oder der zweiten Karkasslage (7) textile Festigkeitsträger, bevorzugt aufweisend Polyamid und/oder Polyester und/oder Baumwolle, sind.

10. Luftreifen (1) nach zumindest einem der vorhergehenden Ansprüche, **dadurch gekennzeichnet, dass**
es sich um einen Fahrradreifen (1), insbesondere um einen Fahrradreifen für einen Einsatzbereich gemäß mindestens Kategorie 1, bevorzugt Kategorie 4 und/oder 5 und/oder höher, der ASTM F2043-13, handelt.

## Claims

1. Pneumatic tyre (1) for a light vehicle, preferably a bicycle tyre, particularly preferably a mountain-bike tyre, having a tread (2), a tyre carcass, tyre sidewalls (3), and having two bead regions (4) with in each case one bead core (5), wherein the tyre carcass has exactly one first carcass ply (6), which forms the radially innermost carcass ply at the tyre zenith (17), and a second carcass ply (7), wherein the two carcass plies (6, 7) in each case extend from the tyre zenith (17) into the bead regions (4) via the tyre sidewalls (3), wrap around the bead cores (5) from axially inside to axially outside, and, in a carcass turn-up (61, 71), are led radially outwards as far as below the tread (2) via the sidewalls (3) and terminate within an axial extent (8) of the tread (2) at carcass-ply ends (62, 72),
wherein one or both of the carcass plies is/are configured as an asymmetrical carcass ply (6, 7), wherein, for the asymmetrical carcass ply, it is the case that the two carcass turn-ups (61, 71) of the respective asymmetrical carcass ply (6, 7) terminate in the same axial half of the tyre,
**characterized in that**
the first carcass ply (6) and the second carcass ply (7) are configured as asymmetrical carcass plies, wherein the carcass turn-ups (61) of the first carcass ply (6) terminate in one axial half of the tyre and the carcass turn-ups (71) of the second carcass ply (7) terminate in another axial half of the tyre, or
the carcass has exactly one asymmetrical carcass ply (6, 7), so that either the first carcass ply (6) or the second carcass ply (7) is configured as an asymmetrical carcass ply.

2. Pneumatic tyre (1) according to Claim 1, **characterized in that** the carcass turn-ups (61) of one carcass ply (6) terminate at a minimum distance (13) of 40% to 60% of an axial extent of the tread (2) from the carcass turn-ups (71) of the other carcass ply (7).

3. Pneumatic tyre (1) according to at least either of the preceding claims, **characterized in that** the carcass turn-ups (61, 71) of the asymmetrical carcass ply (6, 7) are arranged without overlap and so as to be mutually spaced apart axially, preferably spaced apart by an axial distance (14) of greater than 0% to at most 50%, preferably 5% to 40%, of the axial extent (8) of the tread.

4. Pneumatic tyre (1) according to at least one of the preceding claims, **characterized in that** the carcass turn-ups (61, 71) of the one or both asymmetrical carcass ply/plies (6, 7) are in each case arranged so as to meet one another in a flush manner.

5. Pneumatic tyre (1) according to at least one of the preceding claims, **characterized in that** the carcass turn-ups (61, 71) of the asymmetrical carcass ply (6, 7) are arranged so as to mutually overlap, preferably overlap with an axial overlap 15 of greater than 0% to at most 50%, preferably 5% to 40%, of the axial extent (8) of the tread.

6. Pneumatic tyre (1) according to at least one of the preceding claims, **characterized in that** one or two protective plies (31) having strength members are arranged radially between the carcass and the tread, said protective plies terminating radially outside the bead cores (5), in particular within the axial extent (8) of the tread (2).

7. Pneumatic tyre (1) according to the preceding claim, **characterized in that** at least one protective ply (31) of the one or two protective plies (31) covers all the open ends (62) of the first carcass ply (6).

8. Pneumatic tyre (1) according to at least one of the preceding claims, **characterized in that** the carcass is a diagonal carcass, wherein the strength members of the two carcass plies (6,7), while having opposite directions of inclination in the sidewalls, in each case include an angle of 25° to 75°, preferably of 35° to 60°, particularly preferably of 40° to 55°, with the circumferential direction.

9. Pneumatic tyre (1) according to at least one of the preceding claims, **characterized in that** the strength members of the first carcass ply (6) and/or of the second carcass ply (7) are textile strength members, preferably comprising polyamide and/or polyester and/or cotton.

10. Pneumatic tyre (1) according to at least one of the preceding claims, **characterized in that**
said pneumatic tyre is a bicycle tyre (1), in particular a bicycle tyre configured for use in accordance with at least category 1, preferably category 4 and/or 5 and/or higher, of ASTM F2043-13.

## Revendications

1. Pneu (1) destiné à un véhicule léger, de préférence pneu de bicyclette, plus préférentiellement pneu de vélo tout-terrain, comprenant une bande de roulement (2), une carcasse de pneu, des flancs de pneu (3) et deux zones de tringle (4), chacune comportant une tringle (5),
dans lequel la carcasse de pneu comporte exactement une première nappe de carcasse (6), qui forme la nappe de carcasse radialement la plus interne au sommet du pneu (17), et une deuxième nappe de carcasse (7),
les deux nappes de carcasse (6, 7) s'étendant chacune depuis le sommet du pneu (17) à travers les flancs de pneu (3) jusque dans les zones de tringle (4), enveloppant les tringles (5) de l'intérieur axial vers l'extérieur axial et étant guidées dans un retournement de carcasse (61, 71) radialement vers l'extérieur à travers les flancs (3) jusqu'au-dessous de la bande de roulement (2), et se terminant, à l'intérieur d'une étendue axiale (8) de la bande de roulement (2), par des extrémités de nappes de carcasse (62, 72),
l'une ou les deux nappes de carcasse étant réalisées sous la forme de nappes de carcasse asymétriques (6, 7), la nappe de carcasse asymétrique étant telle que les deux retournements de carcasse (61, 71) de la nappe de carcasse asymétrique respective (6, 7) se terminent dans la même moitié axiale du pneu. **caractérisé en ce que**
la première nappe de carcasse (6) et la deuxième nappe de carcasse (7) étant réalisées sous la forme de nappes de carcasse asymétriques, les retournements de carcasse (61) de la première nappe de carcasse (6) se terminant dans une moitié axiale du pneu et les retournements de carcasse (71) de la deuxième nappe de carcasse (7) se terminant dans une autre moitié axiale du pneu, ou
la carcasse comporte exactement une nappe de carcasse asymétrique (6, 7), de sorte que soit la première nappe de carcasse (6), soit la deuxième nappe de carcasse (7) est réalisée sous la forme d'une nappe de carcasse asymétrique.

2. Pneu (1) selon la revendication 1, **caractérisé en ce que** les retournements de carcasse (61) de l'une des nappes de carcasse (6) se terminent à une distance minimale (13) de 40 % à 60 % d'une étendue axiale de la bande de roulement (2) par rapport aux retournements de carcasse (71) de l'autre nappe de carcasse (7).

3. Pneu (1) selon au moins l'une des revendications précédentes, **caractérisé en ce que** les retournements de carcasse (61, 71) de la nappe de carcasse asymétrique (6, 7) sont disposés sans chevauchement et à distance axiale l'un de l'autre, de préférence avec une distance axiale (14) supérieure à 0 % et allant jusqu'à 50 % au maximum, de préférence de 5 % à 40 %, de l'étendue axiale (8) de la bande de roulement.

4. Pneu (1) selon au moins l'une des revendications précédentes, **caractérisé en ce que** les retournements de carcasse (61, 71) de l'une ou des deux nappes de carcasse asymétriques (6, 7) sont chacun disposés en venant affleurer l'un contre l'autre.

5. Pneu (1) selon au moins l'une des revendications précédentes, **caractérisé en ce que** les retournements de carcasse (61, 71) de la nappe de carcasse asymétrique (6, 7) sont disposés en se chevauchant mutuellement, de préférence avec un chevauchement axial (15) supérieur à 0 % et allant jusqu'à 50 % au maximum, de préférence de 5 % à 40 %, de l'étendue axiale (8) de la bande de roulement.

6. Pneu (1) selon au moins l'une des revendications précédentes, **caractérisé en ce que** des éléments de renforcement comportant une ou deux nappes de protection (31) sont disposés radialement entre la carcasse et la bande de roulement, lesdits éléments de renforcement se terminant radialement à l'extérieur des tringles (5), en particulier à l'intérieur de l'étendue axiale (8) de la bande de roulement (2).

7. Pneu (1) selon la revendication précédente, **caractérisé en ce qu'**au moins une nappe de protection (31) de la ou des deux nappes de protection (31) recouvre toutes les extrémités ouvertes (62) de la première nappe de carcasse (6).

8. Pneu (1) selon au moins l'une des revendications précédentes, **caractérisé en ce que** la carcasse est une carcasse diagonale, les éléments de renforcement des deux nappes de carcasse (6, 7) délimitant chacun, dans les flancs, avec la direction circonférentielle, un angle de 25° à 75°, de préférence de 35° à 60°, plus préférentiellement de 40° à 55°, avec une direction d'inclinaison opposée.

9. Pneu (1) selon au moins l'une des revendications précédentes, **caractérisé en ce que** les éléments de renforcement de la première nappe de carcasse (6) et/ou de la deuxième nappe de carcasse (7) sont des éléments de renforcement textiles, comportant de préférence du polyamide et/ou du polyester et/ou du coton.

10. Pneu (1) selon au moins l'une des revendications précédentes, **caractérisé en ce que**
il s'agit d'un pneu de bicyclette (1), en particulier d'un pneu de bicyclette destiné à un domaine d'utilisation conforme au moins à la catégorie 1, de préférence à la catégorie 4 et/ou 5 et/ou supérieure, de la norme ASTM F2043-13.
